# EUROPEAN PATENT APPLICATION

(11) **EP 4 525 155 A1**
(43) Date of publication of application: **19.03.2025**
(21) Application number: 24801068.8
(22) Date of filing: 20.02.2024
(51) Int. Cl.: H01M 50/213

(54) **BATTERY MODULE AND BATTERY PACK**

(30) Priority: 02.08.2023 CN 202322069043 U
(71) Applicant: Eve Energy Co., Ltd., Huizhou, Guangdong 516006 (CN)
(72) Inventor: HUANG, Zhihua, Huizhou, Guangdong 516006 (CN)
(74) Representative: Berggren Oy
(86) International application number: PCT/CN2024/077733
(87) International publication number: WO 2025/025573

(57) **Abstract**

A battery module and a battery pack are provided in the disclosure. The battery module may include cells and a CCS assembly. The CCS assembly may include a plastic bracket, where the plastic bracket is provided with a positive electrode communication hole and a negative electrode communication hole, and a glue filling hole is provided at at least one side of the positive electrode communication hole. A gap between any of the cells and another cell adjacent to the any cell may be defined as a glue filling cavity. At least a portion of the glue filling cavity may be exposed toward the upper side surface of the plastic bracket through the glue filling hole corresponding to the glue filling cavity.

## Description

This application claims priority to Chinese Patent Application No. 202322069043.2, filed with the Chinese Patent Office on August 2, 2023, content of which is incorporated herein by reference in its entirety.

### TECHNICAL FIELD

The present disclosure relates to the field of battery technologies, and more particular to a battery module and a battery pack.

### BACKGROUND

A cells contact system (CCS) assembly of a cylindrical power battery module may be mainly composed of a plastic bracket and a bus bar arranged on the plastic bracket. In order to improve the structural stability of a battery pack and reduce the possibility of heat spreading of the battery pack in a practical use of the battery pack, foam glue may be often filled between cells of the battery pack. In the process of assembling the battery pack, the plastic bracket may be generally assembled to top portions of the cells, then the bus bar assembled onto the plastic bracket may be welded to the cells, and finally the foam glue may be filled into gaps between the cells.

In the related art, the CCS assembly may include the bracket and a plurality of bus bars, where each of the bus bars include a plurality of bus bar monomers, and two adjacent ones of the bus bar monomers are connected by a base substrate to form a bus bar. Each of the bus bar monomers may include a positive electrode connection portion and a negative electrode connection portion connected to the positive electrode connection portion. The bracket may include an end plate, where a plurality of bus bar mounting positions are provided on a first plane of the end plate, a plurality of cell mounting positions are provided on a second plane of the end plate. A positive electrode communication hole and a negative electrode communication hole may be provided on each of the cell mounting positions, a positive electrode of each of the cells is electrically connected to the positive electrode connection portion of corresponding one of the bus bar monomers through corresponding one of the positive electrode communication holes, a negative electrode of the cell is electrically connected to the negative electrode connection portion of another bus bar monomer through the negative electrode communication hole, and the positive electrode communication hole and the negative electrode communication hole are insulated by a flange. Two through-glue holes may be provided above each of the cells and symmetrically disposed with respect to a first direction. After the CCS assembly and the cells are assembled, the top portion of the cell may block the corresponding through-glue holes from bottom to top. When the foam glue may be filled, the foam glue may be poured into the gaps between the bus bar and the flange from top to bottom. However, in order to improve the structural compactness of the CCS module, the gaps between the bus bar and the flange may be usually smaller, which makes the filling of the foam glue difficult and results in inefficient assembly of the battery pack.

### SUMMARY

The present disclosure provides a battery module and a battery pack, to solve the above technical problems.

In a first aspect, embodiments of the present disclosure provide a battery module, including cells and a CCS assembly, where the CCS assembly includes a plastic bracket, bar mounting positions for assembling bar monomers are provided at an upper side surface of the plastic bracket, cell mounting positions for assembling the cells are provided at a lower side surface of the plastic bracket. A positive electrode communication hole and a negative electrode communication hole are provided within a region of each of the cell mounting positions, and a glue filling hole is provided at at least one side of the positive electrode communication hole. Each of the cells is disposed corresponding to corresponding one of positive electrode communication holes, respectively, and a gap between any of the cells and another cell adjacent to the any cell is defined as a glue filling cavity. At least a portion of the glue filling cavity is exposed toward the upper side surface of the plastic bracket through the glue filling hole corresponding to the glue filling cavity.

In a second aspect, the embodiments of the present disclosure provide a battery pack, including the battery module described above.

### Beneficial effects

Beneficial effects of the present disclosure are:
(1) the glue filling hole disposed on the plastic bracket in the battery module can expose the gap between the two adjacent ones of the cells, which is beneficial to reducing the difficulty of filling the glue into the gap between the two adjacent cells.
(2) the battery pack provided according to the present disclosure includes the battery module described above, so that the glue filling hole disposed on the plastic bracket in the battery module can expose the gap between the two adjacent ones of the cells, which is beneficial to reducing the difficulty of filling the glue into the gap between the two adjacent cells.

### BRIEF DESCRIPTION OF THE DRAWINGS

FIG. 1 is a perspective diagram showing a structure of a battery module of a battery pack according to some embodiments of the present disclosure.
FIG. 2 is a top diagram showing a structure of a battery module of a battery pack according to some embodiments of the present disclosure.
FIG. 3 is a perspective diagram showing a structure of a battery module of a battery pack after a portion of cells and bus bars are removed from the battery module according to some embodiments of the present disclosure.
FIG. 4 is a top diagram showing a structure of a battery module of a battery pack after a portion of cells and bus bars are removed from the battery module according to some embodiments of the present disclosure.
FIG. 5 is a bottom diagram showing a structure of a plastic bracket according to some embodiments of the present disclosure.
FIG. 6 is a perspective diagram showing a structure of a bus bar according to some embodiments of the present disclosure.

### REFERENCE NUMERALS OF THE ACCOMPANYING DRAWING:

10-Battery module; 100-Cell; 101-Glue filling cavity; 200-Bus bar, 201-Bar monomer, 202-Connection portion; 300-Plastic bracket; 301-Limiting protrusion; 3011-Weight reducing hole; 3012-Limiting concave surface; 302-Positive electrode communication hole; 303-Negative electrode communication hole; 304-Glue filling hole; 305-Bar mounting position; 306-Connection groove; 307-Flange; 308-Cell mounting position; I-Glue filling region; and 20-CCS assembly.

### DETAILED DESCRIPTION

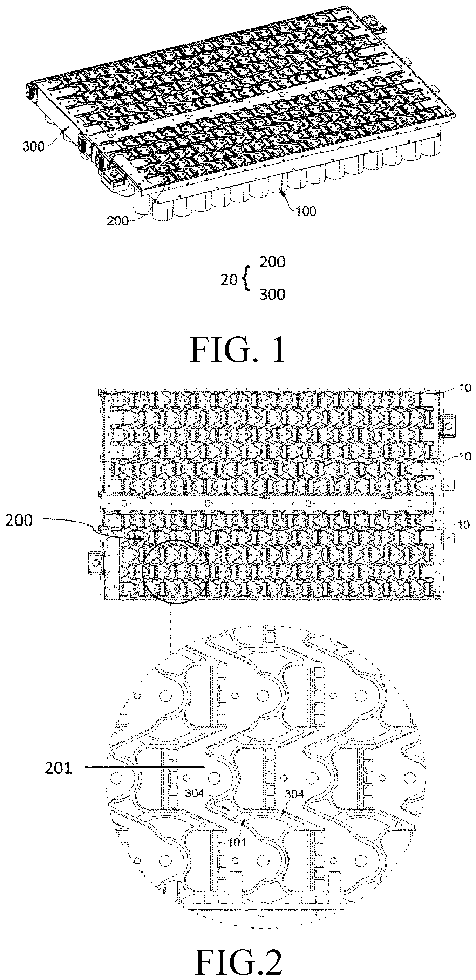

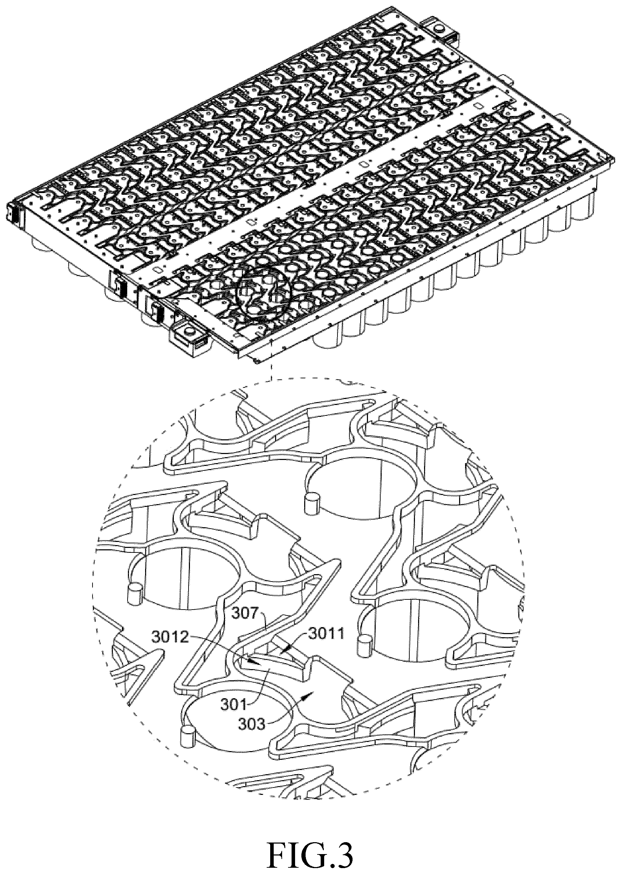

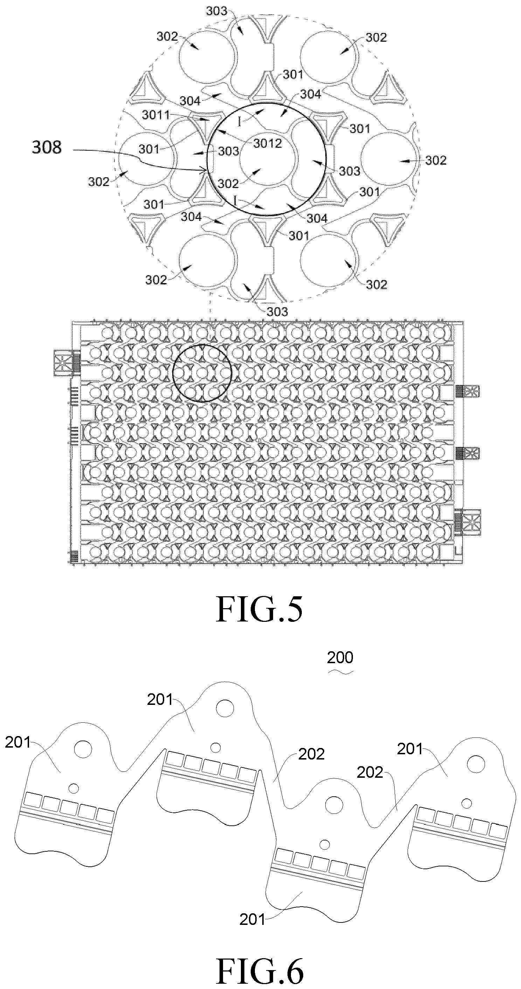

Referring to FIGS. 1 to 6, a battery module 10, specifically a cylindrical power battery module, may include cells 100 and a CCS assembly 20, where the CCS assembly 20 includes a plastic bracket 300 and a bus bar 200 disposed on the plastic bracket 300. As shown in FIG. 2 and FIG. 6, in some embodiments of the present disclosure, the bus bar 200 may include four bar monomers 201 connected by a connection portion 202. An operation principle of the bus bar 200 in series and in parallel connected with the cells in the battery module 10 herein may refer to Chinese Patent Publication No. CN218039705U, which is a prior art and is not repeatedly described herein.

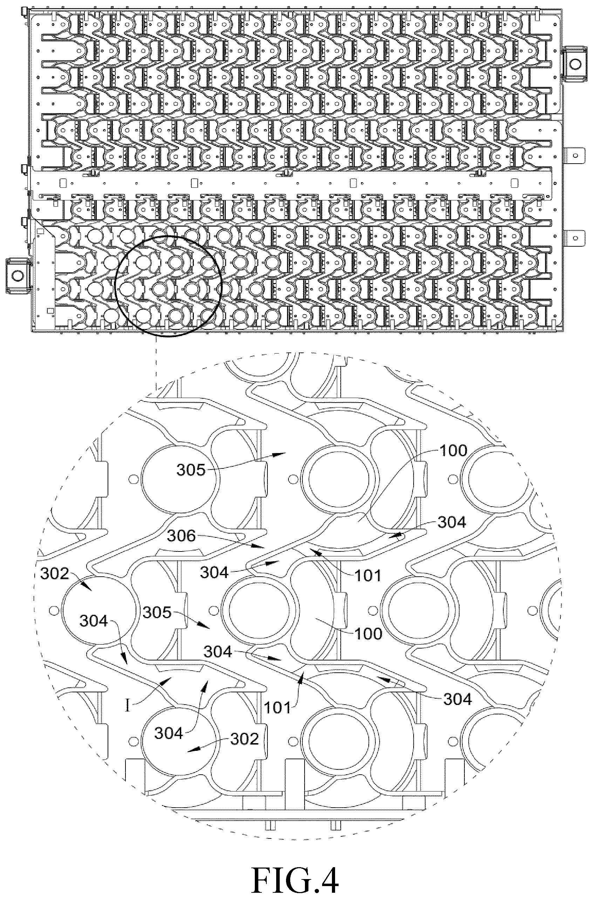

Specifically, in some embodiments of the present disclosure, as shown in FIGS. 4 and 5, bar mounting positions 305 for assembling the bar monomers 201 may be provided at an upper side surface of the plastic bracket 300, and cell mounting positions 308 for assembling the cells 100 may be provided at a lower side surface of the plastic bracket 300, where a positive electrode communication hole 302 and a negative electrode communication hole 303 are provided within a region of each of the cell mounting positions 308, and a glue filling hole 304 is provided at at least one side of the positive electrode communication hole 302. Each of the cells 100 may be disposed corresponding to corresponding one of positive electrode communication holes 302, respectively, and a gap between any of the cells 100 and another cell 100 adjacent to the any cell is defined as a glue filling cavity 101. At least a portion of the glue filling cavity 101 may be exposed toward the upper side surface of the plastic bracket 300 through the glue filling hole 304 corresponding to the glue filling cavity 101. In the present embodiments, a plurality of limiting protrusions 301 may be provided around a peripheral edge of the positive electrode communication hole 302 and provided on a lower side surface of the plastic bracket 300. A region enclosed by a plurality of limiting protrusions 301 around a peripheral edge of the same positive electrode communication hole 302 may be configured to constitute the cell mounting position 308. That is, the cell 100 may be limited by the limiting protrusions 301 around a peripheral edge of the positive electrode communication hole 302 after the cell 100 may be assembled to the cell mounting position 308. The bar mounting positions 305 may be provided in one-to-one correspondence with the bar monomers 201 of the bus bar 200, and a connection groove 306 for accommodating the connection portion 202 may be provided between two adjacent ones of the bar mounting positions 305. The bar mounting position 305 may be in communication with the connection groove 306 and enclosed by a flange 307. As shown in FIGS. 2 and 4, after the bus bar 200 may be assembled at the bar mounting positions 305, both the positive electrode communication hole 302 and the negative electrode communication hole 303 may be shielded by the bus bar 200. Since at least a portion of the glue filling cavity 101 may be exposed toward the upper side surface of the plastic bracket 300 through the glue filling hole 304 corresponding to the glue filling cavity 101, the foam glue can be easily and quickly filled into the glue filling cavity 101 (the gap between any one of the cells 100 and another one) through the glue filling hole 304 during filling of the foam glue, and the difficulty of filling the foam glue may be lower.

In some embodiments of the present disclosure, the glue filling hole 304 may extend, at least in part, in a radial direction of the cell 100 corresponding to the glue filling hole 304 toward a direction away from the cell 100. The glue filling hole 304 herein may be provided so that the glue filling cavity 101 may be exposed toward the upper side surface of the plastic bracket 300, and an outer shape of the glue filling hole 304 may be arbitrarily provided according to the layout of the bar mounting position 305 and the cell mounting position 308, which is not specifically limited herein. It should be noted that, on the premise of ensuring the structural strength of the plastic bracket 300, the area of the glue filling hole 304 should expose the glue filling cavity 101 as much as possible, so as to improve the efficiency of filling the foam glue and reduce the difficulty of filling the foam glue.

As shown in FIG. 4, it may be preferable that one or more glue filling holes 304 may be provided at both sides of the positive electrode communication hole 302 in a width direction of the battery module 10. In this way, the region of the glue filling cavity 101 on the peripheral edge of the cell 100 corresponding to the positive electrode communication hole 302 can be exposed more to further improve the efficiency of filling the foam glue.

Further, glue filling holes 304 of the two adjacent positive electrode communication holes 302 corresponding to the two adjacent bar monomers 201 of the same bus bar 200 may be in communication with each other. As such, in four cells 100 connected in parallel by the same busbar 200, the gap between the two adjacent ones of the cells 100 can be sufficiently exposed through a penetrated glue filling hole 304, so that the efficiency of filling the foam glue can be further improved.

In some embodiments of the present disclosure, the glue filling holes 304, which are in communication with each other, of the two adjacent positive electrode communication holes 302 may be configured to constitute a glue filling region I, and a ratio of an area of the glue filling region I to an area of a single positive electrode communication hole 302 is 0.8-1.4. Preferably, a ratio of an area of the glue filling region I to an area of a single positive electrode communication hole 302 is about 1.13. Specifically, in some embodiments of the present disclosure, the area of the glue filling region I is 450mm², and the area of the single positive electrode communication hole 302 is 397mm². As such, on the one hand, it is possible to ensure that the plastic bracket 300 has a good structural strength, and on the other hand, it is possible to ensure the efficiency of filling the foam glue.

In some embodiments of the present disclosure, a limiting concave surface 3012 may be provided at one side of each of the limiting protrusions 301 toward a cell 100 adjacent to the limiting protrusion 100, and the limiting concave surface 3012 may be concave toward a direction away from the cell 100. Preferably, the limiting concave surface 3012 may an arc surface adapted to a peripheral side surface of the cell 100 corresponding to the limiting concave surface 3012 to better limit the cell 100.

As shown in FIG. 5, in some embodiments of the present disclosure, the cell mounting position 308 may be enclosed by six limiting protrusions 301. Profiles of mounting points of the six limiting protrusions 301 may be arranged coaxially with a positive electrode communication hole 302 corresponding to the limiting protrusions 301.

A weight reducing hole 3011 may be provided at a lower side of the limiting projection 301 and in communication with the negative electrode communication hole 303 adjacent to the weight reducing hole. The weight reducing hole 3011, on the one hand, can reduce the weight of the plastic bracket 300, reduce the material cost of the plastic bracket 300, and, on the other hand, can facilitate overflowing of excess foam glue flowing through the gap between the bar monomer 201 and the flange 307 surrounding the bar mounting positions 305 via the weight-reducing hole 3011 when the foam glue is foamed toward a direction of the busbar 200, thereby reducing the probability of damage to the welding structure between the busbar 200 and the cells 100 caused by the foam glue jacking the monomer 201 or the busbar 200. Specifically, the negative electrode communication hole 303 extends through the plastic bracket 300 and communicates into the bar mounting position 305 corresponding to the negative electrode communication hole 303. Preferably, an inner side wall of the flange 307 at least partially constitutes an inner side wall of the negative electrode communication hole 303 corresponding to the bar mounting position 305. The embodiments of the present disclosure further provide a battery pack, including the battery module 10 described above. As shown in FIG. 2, the battery pack may include three battery modules 10 connected in series. The battery modules 10 of the battery pack may have lower difficulty of filling the foam glue, higher efficiency of filling the foam glue, and higher efficiency of assembling the battery pack.

Preferably, three plastic brackets 300 corresponding to the three battery modules 10 in some embodiments of the present disclosure may be integrally molded.

## Claims

1. A battery module (10), **characterized in that** the battery module (10) comprises cells (100) and a cells contact system (CCS) assembly (20), wherein the CCS assembly (20) comprises:
a plastic bracket (300), wherein bar mounting positions (305) for assembling bar monomers (201) are provided at an upper side surface of the plastic bracket (300), and cell mounting positions (308) for assembling the cells (100) are provided at a lower side surface of the plastic bracket (300),
wherein a positive electrode communication hole (302) and a negative electrode communication hole (303) are provided within a region of each of the cell mounting positions (308), and a glue filling hole (304) is provided at at least one side of the positive electrode communication hole (302); and
each of the cells (100) is disposed corresponding to corresponding one of positive electrode communication holes (302), respectively, a gap between any (100) of the cells (100) and another cell (100) adjacent to the any cell (100) is defined as a glue filling cavity (101), and at least a portion of the glue filling cavity (101) is exposed toward the upper side surface of the plastic bracket (300) through the glue filling hole (304) corresponding to the glue filling cavity (101).

2. The battery module (10) of claim 1, **characterized in that** the glue filling hole (304) extends, at least in part, in a radial direction of the cell (100) corresponding to the glue filling hole (304) toward a direction away from the cell (100).

3. The battery module (10) of claim 1 or 2, **characterized in that** the battery module (10) further comprises a bus bar (200) comprising a plurality of bar monomers (201), wherein glue filling holes (304) of two adjacent positive electrode communication holes (302) corresponding to two adjacent bar monomers (201) of a same bus bar (200) are in communication with each other.

4. The battery module (10) of claim 3, **characterized in that** the glue filling holes (304), which are in communication with each other, of the two adj acent positive electrode communication holes (302) are configured to constitute a glue filling region (I), and a ratio of an area of the glue filling region (I) to an area of a single positive electrode communication hole (302) is 0.8-1.4.

5. The battery module (10) of claim 1 or 2, **characterized in that** one or more glue filling holes (304) are provided at both sides of the positive electrode communication hole (302) in a width direction of the battery module (10).

6. The battery module (10) of claim 1, **characterized in that** a plurality of limiting protrusions (301) are provided around a peripheral edge of the positive electrode communication hole (302) and provided on the lower side surface of the plastic bracket (300); and
a region enclosed by the plurality of limiting protrusions (301) around the peripheral edge of a same positive electrode communication hole (302) is configured to constitute the cell mounting position (308) having the same positive electrode communication hole (302).

7. The battery module (10) of claim 6, **characterized in that** a limiting concave surface (3012) is provided at one side of each of the limiting protrusions (301) toward the cell (100) adjacent to the limiting protrusion (301) and is configured to be concave toward a direction away from the cell (100).

8. The battery module (10) of claim 7, **characterized in that** the limiting concave surface (3012) is an arc surface.

9. The battery module (10) of any of claims 6-8, **characterized in that** a weight reducing hole (3011) is provided at a lower side of each of the limiting projections (301).

10. The battery module (10) of claim 9, **characterized in that** the negative electrode communication hole (303) extends through the plastic bracket (300) and communicates into the bar mounting position (305) corresponding to the negative electrode communication hole (303);
the bar mounting position (305) is enclosed by a flange (307), and an inner side wall of the flange (307) is configured to at least partially constitute an inner side wall of the negative electrode communication hole (303) corresponding to the bar mounting position (305); and
the weight reducing hole (3011) is in communication with the negative electrode communication hole (303) adjacent to the weight reducing hole (3011).

11. A battery pack, comprising: the battery module (10) of any one of claims 1-10.
